# EUROPÄISCHE PATENTANMELDUNG

(11) **EP 1 755 077 A1**
(43) Veröffentlichungstag der Anmeldung: **21.02.2007**
(21) Anmeldenummer: 05090234.5
(22) Anmeldetag: 12.08.2005
(51) Int. Cl.: G06Q 20/00

(54) **Verfahren zum Ermöglichen einer Abrechnung einer Dienstnutzung und entsprechendes Kommunikationsendgerät**

(71) Anmelder: SIEMENS AKTIENGESELLSCHAFT, 80333 München (DE); Fraunhofer-Gesellschaft zur Förderung der angewandten Forschung e.V., 80686 München (DE)
(72) Erfinder: Filipovic, Bartol, 63110 Rodgau (DE); Kuntze, Nicolai, 64293 Darmstadt (DE); Marhöfer, Michael Dr., 82041 Deisenhofen (DE); Rauch, Thomas, 63801 Kleinostheim (DE); Schmidt, Andreas Dr., 65929 Frankfurt am Main (DE)
(74) Vertreter: Berg, Peter

(57) **Zusammenfassung**

Die Erfindung betrifft ein Verfahren zum Ermöglichen einer Abrechnung einer Nutzung von kostenpflichtigen Diensten, wobei bei dem Verfahren von einem mobilen Kommunikationsendgerät (KEG) Daten (D) erfasst werden, welche die Nutzung kostenpflichtiger Dienste mittels des Kommunikationsendgeräts (KEG) betreffen, die erfassten Daten (D) in einem Speicher (SB1) des Kommunikationsendgeräts (KEG) gespeichert werden, und zeitversetzt die Daten (D) von dem Kommunikationsendgerät (KEG) über ein Mobilkommunikationsnetz (KN) zu einem Abrechnungssystem (AS) übertragen werden, von welchem die Abrechnung der Nutzung der kostenpflichtigen Dienste ausführbar ist. Weiterhin betrifft die Erfindung ein Kommunikationsendgerät.

## Beschreibung

Die Erfindung betrifft ein Verfahren zum Ermöglichen einer Abrechnung einer Nutzung von kostenpflichtigen Diensten und ein Kommunikationsendgerät.

In modernen Mobilkommunikationsnetzen werden Telekommunikationsteilnehmern eine Vielzahl von unterschiedlichsten Diensten angeboten, die mittels mobiler Kommunikationsendgeräte genutzt werden können. Diese Dienste gehen weit über die klassischen Dienste (Herstellen einer Sprachkommunikationsverbindung, Übertragen von Fax-Daten oder SMS-Nachrichten) hinaus. Beispielsweise können Dienste angeboten werden, welche eine Nutzung eines lokal auf dem Kommunikationsendgerät ablaufenden Programms (z.B. eines Spielprogramms oder einer Datenbank), eine Teilnahme an Peer-to-Peer-Datenübertragungen (beispielsweise für den Empfang oder die Verteilung von Musikdaten oder Videodaten) oder eine Nutzung einer Navigationssoftware für ein mit dem Kommunikationsendgerät verbundenes Navigationssystem umfassen. Oftmals handelt es sich dabei um kostenpflichtige Dienste, d.h. für die Nutzung dieser Dienste ist ein bestimmter Geldbetrag zu zahlen oder die Nutzung ist einem Anbieter dieser Dienste auf eine andere Weise zu vergüten.

Der Erfindung liegt die Aufgabe zugrunde, ein Verfahren und ein Kommunikationsendgerät anzugeben, die eine sichere und zuverlässige Abrechnung der Nutzung von kostenpflichtigen Diensten ermöglichen.

Diese Aufgabe wird erfindungsgemäß gelöst durch ein Verfahren zum Ermöglichen einer Abrechnung einer Nutzung von kostenpflichtigen Diensten, wobei bei dem Verfahren von einem mobilen Kommunikationsendgerät Daten erfasst werden, welche die Nutzung kostenpflichtiger Dienste mittels des Kommunikationsendgeräts betreffen, die erfassten Daten in einem Speicher des Kommunikationsendgeräts gespeichert werden, und zeitversetzt die Daten von dem Kommunikationsendgerät über ein Mobilkommunikationsnetz zu einem Abrechnungssystem übertragen werden, von welchem die Abrechnung der Nutzung der kostenpflichtigen Dienste ausführbar ist. Dabei ist insbesondere vorteilhaft, dass die erfassten Daten in einem Speicher des Kommunikationsendgeräts temporär zwischengespeichert werden und zeitversetzt (d.h. nicht sofort bei Nutzung des Dienstes, sondern zu einem späteren Zeitpunkt) von dem Kommunikationsendgerät zu dem Abrechnungssystem übertragen werden. Dadurch können die Daten, welche die Nutzung der kostenpflichtigen Dienste betreffen, auch dann mittels des Kommunikationsendgerätes erfasst werden, wenn zum Zeitpunkt der Dienstnutzung keine Datenverbindung zwischen dem Kommunikationsendgerät und dem Abrechnungssystem besteht. Ein solcher Fall kann beispielsweise dann vorliegen, wenn sich ein mobiles Kommunikationsendgerät nicht im Einflussbereich (coverage area) eines Mobilkommunikationsnetzes befindet oder wenn die Funkverbindung zwischen dem Kommunikationsendgerät und dem Mobilkommunikationsnetz gestört ist.

Das Verfahren kann so ausgestaltet sein, dass ein Datenerfassungsprogramm des mobilen Kommunikationsendgeräts auf Unverändertheit überprüft wird, das Datenerfassungsprogramm gestartet wird, wenn es unverändert ist, und von dem Datenerfassungsprogramm die Daten erfasst werden, welche die Nutzung kostenpflichtiger Dienste mittels des Kommunikationsendgeräts betreffen. Dabei ist vorteilhaft, dass das Datenerfassungsprogramm vor dessen Start auf Unverändertheit überprüft wird. Damit kann zuverlässig erkannt werden, ob eine (z. B. in betrügerischer Absicht vorgenommene) Manipulation des Datenerfassungsprogramms vorliegt. Solche Manipulationen könnten beispielsweise mit dem Ziel vorgenommen werden, bei der Dienstnutzung die Datenerfassung zu verfälschen und damit die Dienste ohne korrekte Abrechnung und Bezahlung zu nutzen.

Das Verfahren kann so ausgestaltet sein, dass das Datenerfassungsprogramm auf Unverändertheit überprüft wird mittels eines in das Kommunikationsendgerät integrierten vertrauenswürdigen Plattformmoduls. Mittels derartiger, als solche bekannter vertrauenswürdiger Plattformmodule (die auch als "trusted platform modules" bezeichnet werden) lässt sich diese Überprüfung schnell und zuverlässig durchführen. Durch das Prüfen auf Unverändertheit kann vorteilhafterweise eine Manipulation des Datenerfassungsprogramms oder eine unberechtigte Veränderung zuverlässig erkannt werden.

Das Verfahren kann vorteilhafterweise so ablaufen, dass das Datenerfassungsprogramm auf Unverändertheit überprüft wird mittels einer Prüfsumme. Mittels der Prüfsumme (die auch als Hash-Wert bezeichnet wird) kann zuverlässig erkannt werden, ob das Datenerfassungsprogramm verändert wurde oder nicht.

Das Verfahren kann so ausgestaltet sein, dass die erfassten Daten in dem Kommunikationsendgerät gespeichert werden, bis eine Kommunikationsverbindung zwischen dem mobilen Kommunikationsendgerät und dem Mobilkommunikationsnetz aufbaubar ist. Daraufhin kann die Kommunikationsverbindung zwischen dem mobilen Kommunikationsendgerät und dem Mobilkommunikationsnetz aufgebaut werden und die erfassten Daten von dem Kommunikationsendgerät über das Mobilkommunikationsnetz zu dem Abrechnungssystem übertragen werden. Die erfassten Daten werden also vorteilhafterweise insbesondere dann in dem Kommunikationsendgerät temporär zwischengespeichert, wenn ein Aufbau einer Kommunikationsverbindung zwischen dem mobilen Kommunikationsendgerät und dem Mobilkommunikationsnetz fehlschlägt oder nicht möglich ist. Dies ermöglicht es, auch während dieser Zeitspanne kostenpflichtige Dienste zu nutzen und eine Abrechnung der während dieser Zeitspanne genutzten kostenpflichtigen Dienste zu ermöglichen bzw. vorzunehmen.

Das Verfahren kann so ablaufen, dass die erfassten Daten in einem gesicherten Speicherbereich des Kommunikationsendgeräts gespeichert werden. Dadurch wird vorteilhafterweise verhindert, dass die erfassten Daten während der Speicherung im Kommunikationsendgerät unberechtigterweise geändert oder verfälscht werden.

Das Verfahren kann so ausgestaltet sein, dass die Daten zu vorgewählten Zeitpunkten von dem Kommunikationsendgerät über das Mobilkommunikationsnetz zu dem Abrechnungssystem übertragen werden. Durch die Übertragung der Daten zu vorgewählten Zeitpunkten kann insbesondere vorteilhafterweise die bei dem Abrechnungssystem und/oder dem Mobilkommunikationsnetz auftretende Last verteilt werden und damit eine optimale Nutzung der Ressourcen des Abrechnungssystems und/oder des Mobilkommunikationsnetzes erreicht werden.

Das Verfahren kann auch so ausgestaltet sein, dass auf eine Anforderung des Mobilkommunikationsnetzes hin die Daten von dem Kommunikationsendgerät über das Mobilkommunikationsnetz zu dem Abrechnungssystem übertragen werden. Bei dieser Ausgestaltung des erfindungsgemäßen Verfahrens kann vorteilhafterweise von dem Mobilkommunikationsnetz festgelegt werden, zu welchem Zeitpunkt die Daten von dem Kommunikationsendgerät zu dem Abrechnungssystem übertragen werden. Beispielsweise kann nach einer längeren Unterbrechung der Kommunikationsverbindung zwischen dem Kommunikationsendgerät und dem Mobilkommunikationsnetz bei Wiederherstellen der Kommunikationsverbindung eine Übertragung der bei dem Kommunikationsendgerät gespeicherten Daten angefordert werden (indem beispielsweise eine Anforderungsnachricht von dem Mobilkommunikationsnetz zu dem Kommunikationsendgerät gesendet wird).

Das Verfahren kann auch so ablaufen, dass von dem Kommunikationsendgerät nach einer erfolgreichen Übertragung der Daten eine die übertragenen Daten betreffende Bestätigungsnachricht empfangen wird, und daraufhin von dem Kommunikationsendgerät die Speicherung der erfolgreich übertragenen Daten beendet wird. Mittels der (beispielsweise von dem Abrechnungssystem stammenden) Bestätigungsnachricht wird dabei vorteilhafterweise das Kommunikationsendgerät darüber informiert, dass die Daten erfolgreich zu dem Mobilkommunikationsnetz oder zu dem Abrechnungssystem übertragen wurden. Daraufhin beendet das Kommunikationsendgerät die Speicherung dieser Daten (indem beispielsweise die Daten gelöscht werden oder indem der von diesen Daten genutzte Speicherbereich zur Speicherung neuer Daten freigegeben wird).

Das Verfahren kann auch so ablaufen, dass eine weitere Nutzung von kostenpflichtigen Diensten kommunikationsendgeräteseitig eingeschränkt wird, wenn die Nutzung der Dienste, welche zu den erfassten, gespeicherten und noch nicht zu dem Abrechnungssystem übertragenen Daten geführt hat, einen vorgewählten Nutzungsumfang überschreitet. Dadurch wird vorteilhafterweise erreicht, dass bei Überschreiten eines vorgewählten Nutzungsumfangs der kostenpflichtigen Dienste (beispielsweise bei Überschreitung einer bestimmten Spieldauer eines auf dem Kommunikationsendgerät ablaufenden Spiels) eine weitergehende Nutzung der kostenpflichtigen Dienste eingeschränkt wird. Dabei kann die weitere Nutzung der Dienste auch komplett eingeschränkt (d.h. unterbunden bzw. verhindert) werden. Diese Einschränkung erfolgt vorteilhafterweise kommunikationsendgeräteseitig, d. h. die Einschränkung wird eigenständig durch das Kommunikationsendgerät realisiert. Dabei sind beispielsweise keine Server des Kommunikationsnetzes beteiligt. Durch geeignete Wahl des Nutzungsumfangs der kostenpflichtigen Dienste lässt sich die Sicherheit des erfindungsgemäßen Verfahrens beträchtlich erhöhen, weil auch z. B. im Falle eines plötzlich auftretenden Defektes des Kommunikationsendgerätes oder einer entladenen Batterie des Kommunikationsendgerätes lediglich maximal der vorgewählte Nutzungsumfang der kostenpflichtigen Dienste ohne Abrechnung bleibt.

Das Verfahren kann auch so ausgestaltet sein, dass dem Kommunikationsendgerät oder dessen Nutzer ein Guthabenkonto zugeordnet ist, über das die Abrechnung der Nutzung der kostenpflichtigen Dienste ausführbar ist. Dadurch lässt sich das erfindungsgemäße Verfahren vorteilhafterweise unter Nutzung von als solche bekannten und etablierten Guthabenkonten (Prepaid-Konten) realisieren.

Bei dem erfindungsgemäßen Verfahren kann mittels des Kommunikationsendgeräts der Kontostand des Guthabenkontos erhöht werden, indem von dem mobilen Kommunikationsendgerät eine das Guthabenkonto betreffende Kontonachricht empfangen wird, welche die Information enthält, dass für die Erhöhung des Kontostands eine Erhöhungssumme bezahlt wurde, und diese Kontonachricht von dem Kommunikationsendgerät über das Mobilkommunikationsnetz zu dem Abrechnungssystem übertragen wird, wodurch das Abrechnungssystem angeregt wird, den Kontostand des Guthabenkontos zu erhöhen. Dadurch kann auf einfache Art und Weise das Guthabenkonto "aufgeladen" werden.

Die oben genannte Aufgabe wird ebenfalls erfindungsgemäß gelöst durch ein Kommunikationsendgerät das ausgestaltet ist zum Erfassen von Daten, welche die Nutzung kostenpflichtiger Dienste mittels des Kommunikationsendgeräts betreffen, und das eine Speichereinheit zum Speichern der erfassten Daten aufweist und das eine Übertragungseinheit zum Übertragen der Daten über ein Mobilkommunikationsnetz zu einem Abrechnungssystem aufweist. Dabei ist insbesondere vorteilhaft, dass das Kommunikationsendgerät ausgestaltet ist zum Erfassen der Daten, welche die Nutzung betreffen, zum temporären Zwischenspeichern dieser (Nutzungs-)Daten in einer Speichereinheit und zum (zeitversetzten) Übertragen der Daten über das Mobilkommunikationsnetz zu dem Abrechnungssystem.

Das Kommunikationsendgerät kann aufweisen ein Datenerfassungsprogramm zum Erfassen der Daten, welche die Nutzung kostenpflichtiger Dienste mittels des Kommunikationsendgeräts betreffen.

Weiterhin kann das Kommunikationsendgerät mit einer Einrichtung ausgestattet sein, die das Datenerfassungsprogramm auf Unverändertheit überprüft und ein Starten des Datenerfassungsprogramm ermöglicht, wenn es unverändert ist. Dabei ist vorteilhaft, dass die Erfassung der Daten von einem auf Unverändertheit überprüften Datenerfassungsprogramm vorgenommen wird, so dass eine Manipulation des Datenerfassungsprogramms verhindert wird.

Dabei kann die Einrichtung als ein vertrauenswürdiges Plattformmodul ausgestaltet sein, das in das Kommunikationsendgerät integriert ist. Mittels dieses als solches bekannten vertrauenswürdigen Plattformmoduls lässt sich die Überprüfung auf Unverändertheit einfach und kostengünstig realisieren.

Bei dem Kommunikationsendgerät kann die Einrichtung so ausgestaltet sein, dass sie das Datenerfassungsprogramm auf Unverändertheit überprüft mittels einer Prüfsumme. Mittels des vertrauenswürdigen Plattformmoduls bzw. mittels der Prüfsumme lässt sich sicher und zuverlässig überprüfen, ob das Kommunikationsendgerät (z. B. unberechtigterweise) verändert bzw. modifiziert wurde.

Das Kommunikationsendgerät kann so aufgebaut sein, dass die Speichereinheit einen gesicherten Speicherbereich zum Speichern der erfassten Daten aufweist. Mittels eines derartigen gesicherten Speicherbereichs lässt sich vorteilhafterweise verhindern, dass die temporär zwischengespeicherten Daten unberechtigterweise verändert, verfälscht oder gelöscht werden.

Im Folgenden wird die Erfindung anhand eines Ausführungsbeispiels näher erläutert. Dabei ist in
- Figur 1: ein mit einem Mobilkommunikationsnetz verbundenes Kommunikationsendgerät und in
- Figur 2: ein beispielhafter Nachrichtenaustausch zwischen dem Mobilkommunikationsnetz und dem Kommunikationsendgerät dargestellt.

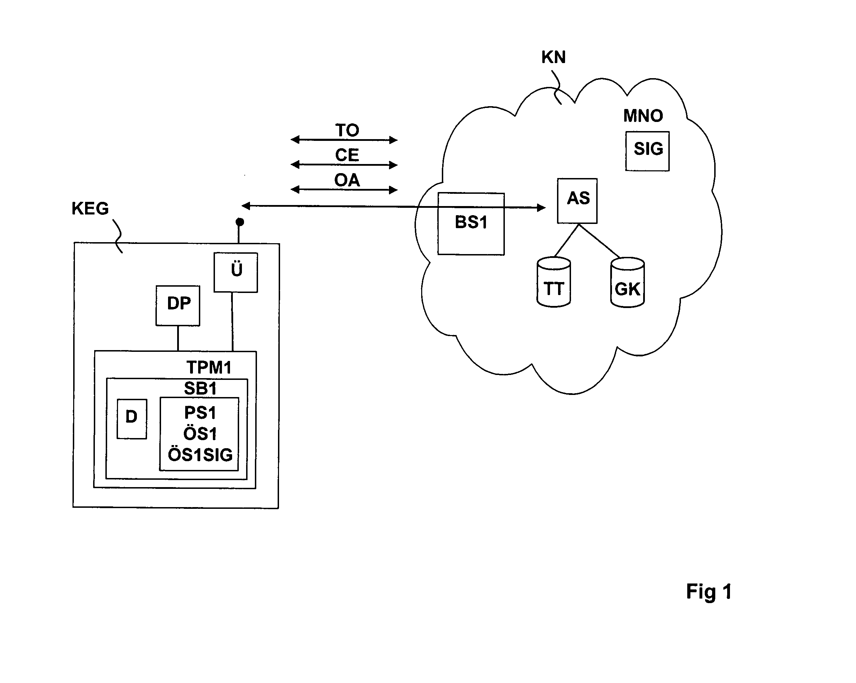

In Figur 1 ist ein Kommunikationsendgerät KEG in Form eines Mobiltelefons dargestellt. Es kann aber auch beispielsweise ein Kommunikationsendgerät in Form eines PDA (Personal Digital Assistent) oder in Form eines Rechners mit einer Mobilfunkschnittstelle verwendet werden. Das Kommunikationsendgerät KEG ist mit einem vertrauenswürdigen Plattformmodul TPM1 ausgestattet. Das vertrauenswürdige Plattformmodul TPM1 wird auch als "trusted platform module" bezeichnet und ist als solches beispielsweise aus der Druckschrift "TPM Main; Part 1; Design Principles; Specification Version 1.2; Revision 85 vom 13. Februar 2005 der Organisation TrustedComputingGroup, insbesondere aus Kap. 4 "TPM Architecture" bekannt. Mittels des vertrauenswürdigen Plattformmoduls TPM1 kann eine verlässliche Aussage über die Unverändertheit und/oder über die Sicherheit des Kommunikationsendgerätes KEG gemacht werden.

In dem Kommunikationsendgerät KEG ist ein Datenerfassungsprogramm DP gespeichert, welches Daten erfasst, die die Nutzung kostenpflichtiger Dienste mittels des Kommunikationsendgeräts betreffen. Beispielsweise beim Einschalten des Kommunikationsendgerätes wird das Datenerfassungsprogramm DP auf Unverändertheit überprüft. Diese Überprüfung erfolgt mittels des in das Kommunikationsendgerät integrierten vertrauenswürdigen Plattformmoduls TPM1. Die Überprüfung wird beispielsweise ausgeführt, indem das Plattformmodul TPM1 eine Prüfsumme (Hash-Wert) des Datenerfassungsprogramms bildet und diese Prüfsumme mit einer früher abgespeicherten Soll-Prüfsumme vergleicht. Bei Übereinstimmung der Prüfsumme mit der Soll-Prüfsumme erkennt das Plattformmodul, dass das Datenerfassungsprogramm unverändert ist. Erst wenn festgestellt wurde, dass das Datenerfassungsprogramm unverändert ist, wird von dem vertrauenswürdigen Plattformmodul TPM1 ein Starten des Datenerfassungsprogramms ermöglicht, indem ein Flag gesetzt wird. Daraufhin wird das Datenerfassungsprogramm DP auf dem Kommunikationsendgerät KEG gestartet.

Mittels des vertrauenswürdigen Plattformmoduls TPM1 wird in dem Kommunikationsendgerät KEG außerdem in einer Speichereinheit ein sicherer Speicherbereich SB1 realisiert, in dem verschiedenste Daten abgespeichert werden können. Wie in Figur 1 dargestellt, werden in dem sicheren Speicherbereich SB1 verschiedene Schlüssel PS1, ÖS1 und ÖS1SIG (Details zu diesen Schlüsseln sind unten angegeben) und Daten D abgespeichert, wobei diese Daten D die Nutzung kostenpflichtiger Dienste mittels des Kommunikationsendgerätes KEG betreffen. In dem Kommunikationsendgerät KEG ist also eine Speichereinheit zum temporären Zwischenspeichern der erfassten Daten D mit einem sicheren Speicherbereich SB1 vorhanden.

Weiterhin ist in Figur 1 ein Kommunikationsnetz KN dargestellt, welches von einem Netzwerkoperator MNO (Mobile Network Operator) verwaltet wird. Die Infrastruktur des Kommunikationsnetzes KN wird also durch den Netzwerkoperator MNO verwaltet. In diesem Kommunikationsnetz befindet sich neben einer beispielhaft dargestellten Basisstation BS1 ein Abrechnungssystem AS, welches zum Abrechnen der Nutzung von kostenpflichtigen Diensten verwendet wird. Bei diesem Abrechnungssystem AS handelt es sich im Ausführungsbeispiel um ein so genanntes "Prepaid-Abrechnungssystem", welches eine Abrechnung der genutzten Dienste über ein vorausbezahltes Guthabenkonto GK vornimmt. Das Abrechnungssystem AS ist mit einer weiteren Speichereinheit verbunden, in der Tariftabellen TT (so genannte tariff schedules) abgespeichert sind. In diesen Tariftabellen TT ist abgelegt, wie hoch der Preis für die Nutzung bestimmter kostenpflichtiger Dienste ist. Beispielsweise kann in einer derartigen Tariftabelle TT abgelegt sein, dass eine zehnminütige Nutzung eines kostenpflichtigen, auf dem Kommunikationsendgerät installierten Spieles 0,50 Euro kostet.

In dem in Figur 1 dargestellten Kommunikationsendgerät KEG ist weiterhin eine Übertragungseinheit Ü enthalten, mittels der die erfassten und gespeicherten Daten D über das Mobilkommunikationsnetz KN zu dem Abrechnungssystem AS übertragen werden können.

Im Folgenden wird das Verfahren zum Ermöglichen einer Abrechnung einer Nutzung von kostenpflichtigen Diensten detailliert erläutert.

Eine erste vorbereitende Phase findet statt, wenn sich das Kommunikationsendgerät KEG im Einflussbereich des Netzwerkoperators MNO des Kommunikationsnetzes KN befindet (beispielsweise vor einem Verkauf des Kommunikationsendgerätes KEG). Diese Phase kann als "Take-Ownership-Phase" bezeichnet werden, weil in dieser Phase der Netzwerkoperator MNO des Kommunikationsnetzes KN die Rolle des "Besitzers" (owners) Kommunikationsendgerätes KEG übernimmt. (Bei der Verwendung eines vertrauenswürdigen Plattformmoduls TPM wird zwischen dem "owner" eines Gerätes (das ist hier der Betreiber des Kommunikationsnetzes KN) und dem Nutzer eines Gerätes (das ist hier der Nutzer des Kommunikationsendgerätes, d. h. der Kunde des Kommunikationsnetzes) unterschieden.) In dieser "Take-Ownership-Phase" wird kommunikationsnetzseitig für das Kommunikationsendgerät KEG ein öffentlicher Schlüssel (public key) ÖS1 und ein privater Schlüssel (private key) PS1 (d.h. ein sogenanntes public-private-Schlüsselpaar) erzeugt und zu dem Kommunikationsendgerät KEG übertragen. Der öffentliche Schlüssel ÖS1 und der private Schlüssel PS1 werden in dem vertrauenswürdigen Plattformmodul TPM1 in dem gesicherten Speicherbereich SB1 (einem sog. "secure storage") abgespeichert. Der private Schlüssel PS1 wird dabei in dem gesicherten Speicherbereich SB1 derart abgespeichert, dass ein Auslesen dieses Schlüssels von außerhalb des vertrauenswürdigen Plattformmoduls TPM1 nicht mehr möglich ist. Der öffentliche Schlüssel ÖS1 wird mit einem Signierschlüssel SIG signiert, welcher dem Kommunikationsnetz KN zugeordnet ist. Beispielsweise kann dieser Signierschlüssel SIG dem Netzwerkbetreiber MNO zugeordnet sein. Der signierte öffentliche Schlüssel ÖS1SIG wird ebenfalls in dem gesicherten Speicherbereich SB1 des Zusatzgerätes ZG abgespeichert. Damit ist das Kommunikationsendgerät KEG dem Kommunikationsnetz KN bzw. dessen Netzwerkoperator MNO zugeordnet.

Die digitale Signatur des signierten öffentlichen Schlüssels ÖS1SIG ermöglicht die Überprüfung der Integrität der signierten Daten, hier also die Überprüfung der Integrität des öffentlichen Schlüssels. Im Folgenden kann also eine Veränderung des öffentlichen Schlüssels während der Übermittlung oder Speicherung bemerkt werden. Außerdem ermöglicht die digitale Signatur eine Ermittlung der Herkunft der signierten Daten, d.h. eine Prüfung deren Authentizität. Zum Signieren kann beispielsweise das Protokoll PKCS#7 oder PKCS#12 verwendet werden; das Zertifikat kann beispielsweise das Format X.509 aufweisen. Die Signierung des öffentlichen Schlüssels ist insbesondere deshalb vorteilhaft, weil sie ermöglicht, das Kommunikationsendgerät KEG (und ggf. weitere Kommunikationsendgeräte) zentral in dem Kommunikationsnetz KN zu registrieren, ohne bei dem Kommunikationsnetz KN individuelle Daten des Kommunikationsendgeräts abspeichern zu müssen. Sobald nämlich der öffentliche Schlüssel des Kommunikationsendgeräts KEG mit dem Signaturschlüssel SIG signiert ist, kann sich das Kommunikationsendgerät KEG gewissermaßen mit dem öffentlichen Schlüssel ÖS1SIG "ausweisen", d. h. anhand des signierten öffentlichen Schlüssels wird erkannt, dass der Netzwerkoperator MNO der "Besitzer" (= owner) des Kommunikationsendgeräts KEG ist.

Damit ist der Netzwerkoperator MNO als Besitzer (= "owner") sowohl des Kommunikationsendgerätes KEG registriert; das Kommunikationsendgerät KEG ist dem Kommunikationsnetz KN bzw. dessen Netzwerkoperator MNO zugeordnet. Die "Take-Ownership-Phase" bezüglich des Kommunikationsendgerätes KEG ist in Figur 1 mittels eines Pfeils TO dargestellt.

Als nächstes findet eine zweite Phase statt, welche als eine "Initialisierungs-Phase" bezeichnet werden kann. Während dieser Initialisierungs-Phase befindet sich das Kommunikationsendgerät KEG im Einflussbereich seines Nutzers (das Kommunikationsendgerät KEG wurde beispielsweise verkauft). Die Initialisierungs-Phase unterteilt sich in zwei Teilphasen.

### Teilphase 1:

Die Teilphase 1 kann als "context establishment" bezeichnet werden. Während dieser Phase wird ein verschlüsselter Kommunikationskanal aufgebaut zwischen dem Kommunikationsendgerät KEG und dem Kommunikationsnetz KN. Dabei übermittelt das Kommunikationsendgerät KEG seinen signierten öffentlichen Schlüssel ÖS1SIG an das Kommunikationsnetz KN; und anhand des signierten Schlüssels ÖS1SIG stellt das Kommunikationsnetz KN fest, dass das Kommunikationsendgerät KEG während der "Take-Ownership-Phase" dem Kommunikationsnetz KN bzw. dessen Netzwerkoperator MNO zugeordnet wurde. Damit ist die Teilphase 1 abgeschlossen. Die Teilphase 1 ("context establishment") ist in Figur 1 mittels eines Pfeils CE dargestellt.

### Teilphase 2:

Nach erfolgreichem Abschluss der Teilphase 1 folgt die Teilphase 2, welche auch als "online attestation" oder "remote attestation" bezeichnet wird. Während der Teilphase 2 nimmt das Kommunikationsendgerät KEG (beispielsweise nach dem Einschalten) Kontakt zu dem Kommunikationsnetz KN auf und übermittelt eine Aussage über die Sicherheit und die Unverändertheit des Kommunikationsendgerätes KEG an den Netzwerkoperator MNO. Dieser Schritt als solcher ist bekannt beispielsweise aus dem Dokument "Trusted Mobile Platform,
Protocol Specification Document, Rev. 1.00" vom 5.4.2004, insbesondere aus Kap. 5.5 "Integrity Reporting Protocol".

Dieser Schritt wird durch das vertrauenswürdige Plattformmodul TPM1 durchgeführt. Bei erfolgreichem Abschluss der "online attestation" ist eine "Vertrauenswürdigkeit" des Kommunikationsendgerätes KEG sichergestellt, d. h. der Netzwerkoperator MNO kann darauf vertrauen, dass das Kommunikationsendgerät KEG1 bezüglich des beschriebenen Verfahrens erwartungsgemäß funktioniert und nicht von Dritten manipuliert wurde. Damit ist die Teilphase 2 und die Initialisierungsphase beendet. Die Teilphase 2 ("online attestation") ist in Figur 1 mittels eines Pfeils OA dargestellt.

Nach erfolgreichem Abschluss der Initialisierungsphase kann mit dem Kommunikationsendgerät KEG ein kostenpflichtiger Dienst genutzt werden. Bei dieser Nutzung werden von dem Datenerfassungsprogramm DP diejenigen Daten D erfasst, welche die Nutzung dieses kostenpflichtigen Dienstes betreffen. Diese Phase kann als "Arbeitsphase" bezeichnet werden.

Insbesondere während der Arbeitsphase wird in dem Kommunikationsendgerät KEG ein Betriebssystem verwendet, welches entsprechend den Spezifikationen des "Trusted Computing" ausgestaltet ist (ein so genanntes Trusted Computing-erweitertes-Betriebssystem). Ein derartiges Betriebssystem als solches ist bekannt und wird beispielsweise mittels des vertrauenswürdigen Moduls TPM1 des Kommunikationsendgerätes KEG realisiert. Mittels dieses Betriebssystems kann sichergestellt werden, dass ein Computerprogramm, welches die Daten erfasst (die die Nutzung kostenpflichtiger Dienste betreffen), welches die Speicherung der Daten in dem Speicher des Kommunikationsendgerätes organisiert und/oder die (spätere, d.h. zeitversetzte) Übertragung der gespeicherten Daten von dem Kommunikationsendgerät zu dem Abrechnungssystem veranlasst, eine sichere Arbeitsumgebung vorfindet und nicht unbemerkterweise modifiziert oder verändert werden kann.

Dies ist deshalb wichtig, weil in der Arbeitsphase sichergestellt wird, dass für sämtliche Nutzungen kostenpflichtiger Dienste die Daten erfasst, in dem Speicher gespeichert und später zu dem Abrechnungssystem übertragen werden. Gelänge es, die obengenannten Computerprogramme (z.B. das Datenerfassungsprogramm DP) zu manipulieren, dann könnten mittels des Kommunikationsendgerätes KEG auch kostenpflichtige Dienste genutzt werden, ohne dass diese kostenpflichtigen Dienste bzw. die Nutzung dieser kostenpflichtigen Dienste betreffenden Daten erfasst, gespeichert und später an das Abrechnungssystem übertragen werden würde. Damit wäre eine korrekte Abrechnung der Nutzung der kostenpflichtigen Dienste nicht möglich.

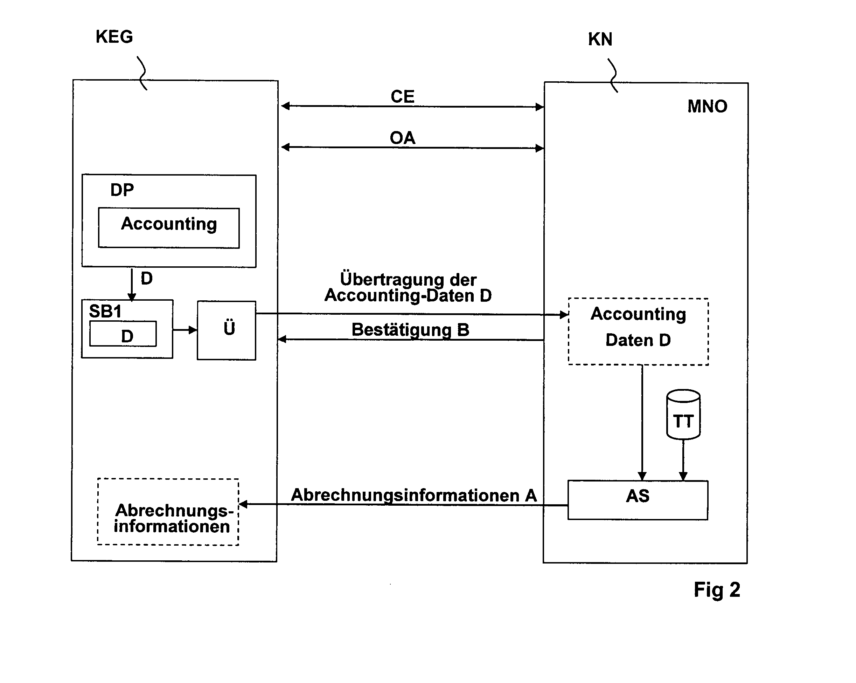

Mittels Figur 2 wird der Ablauf des Verfahrens zum Ermöglichen einer Abrechnung detaillierter dargestellt. Zunächst findet das oben erläuterte "Context Establishment" statt (Pfeil CE). Danach wird die oben erläuterte "Online Attestation" durchgeführt (Pfeil OA). Bei dieser "Online Attestation" wird unter anderen das Datenerfassungsprogramm DP auf Unverändertheit überprüft; weiterhin werden aber auch andere wesentliche Elemente des Kommunikationsendgerätes KEG auf Unverändertheit überprüft, beispielsweise die Speichereinheit mit dem sicheren Speicherbereich SB1 und die Übertragungseinheit Ü zur Übertragung der Daten zu dem Abrechnungssystem. Wenn das Datenerfassungsprogramm DP unverändert ist, wird es auf dem Kommunikationsendgerät KEG gestartet.

Im Ausführungsbeispiel soll angenommen werden, dass ein Nutzer des Kommunikationsendgerätes KEG ein auf dem Kommunikationsendgerät KEG installiertes Spiel "Car Race" nutzen möchten, wobei diese Nutzung kostenpflichtig ist. Dieses Spiel steht hier beispielhaft für einen kostenpflichtigen Dienst, der dem Nutzer des Kommunikationsendgerätes KEG angeboten wird und der von dem Nutzer des Kommunikationsendgerätes genutzt wird. Weiterhin soll angenommen werden, dass sich das Kommunikationsendgerät KEG zum Zeitpunkt der Spiel-Nutzung nicht im Einflussbereich des Mobilkommunikationsnetzes KN befindet, weil sich der Nutzer mit seinem Kommunikationsendgerät in einem elektromagnetische Wellen abschirmenden Stahlbetongebäude befindet.

Bei der Nutzung des Spiels werden von dem Datenerfassungsprogramm DP die Daten D erfasst, welche die Nutzung des Spiels betreffen. Im Ausführungsbeispiel sind dies ein eindeutiges Kennzeichen des Spiels ("Car-Race V.3.7.5"), die Spieldauer ("15 Minuten, 30 Sekunden") und eine Kennung des Spiele-Nutzers ("Karl Müller, 01711234567"). In diesem Ausführungsbeispiel setzt sich die Kennung aus dem Namen des Nutzers und seiner Mobiltelefonnummer MSISDN (Mobile Station ISDN Number) zusammen. Das eindeutige Kennzeichen des Spiels und die Kennung des Dienstnutzers stellen dabei ergänzende Gebühreninformationen dar. (Mittels verschiedener Kennzeichen für verschiedene Dienste können diese verschiedenen Dienste unterschieden werden; in den Tariftabellen TT können für die verschiedenen Dienste unterschiedliche Tarife abgespeichert sein.)

Die Erfassung dieser Daten D wird in der Figur 2 als "Accounting" bezeichnet. Daraufhin werden die erfassten Daten (Accounting-Daten D) in einem Speicher (hier in dem gesicherten Speicherbereich SB1) des Kommunikationsendgerätes KEG gespeichert.

Wenn der Nutzer mit seinem Kommunikationsendgerät das elektromagnetische Wellen abschirmende Gebäude verlässt, dann ist auch wieder eine Kommunikationsverbindung zwischen dem mobilen Kommunikationsendgerät KEG und dem Mobilkommunikationsnetz KN aufbaubar. Daraufhin wird die Kommunikationsverbindung zwischen dem mobilen Kommunikationsendgerät KEG und dem Mobilkommunikationsnetz KN aufgebaut. Die in dem gesicherten Speicherbereich SB1 abgespeicherten Accounting-Daten D werden jetzt ausgelesen und über die Übertragungseinheit Ü zu dem Mobilkommunikationsnetz KN übertragen. Daraufhin sendet das Mobilkommunikationsnetz KN eine Bestätigungsnachricht B an das Kommunikationsendgerät KEG zurück. Mittels dieser Bestätigungsnachricht werden die Informationen übertragen, dass die Übertragung der Accounting-Daten D von dem Kommunikationsendgerät KEG zu dem Mobilkommunikationsnetz KN erfolgreich abgeschlossen wurde. Auf dem Empfang der Bestätigungsnachricht B hin löscht das Kommunikationsendgerät KEG die in den Speicherbereich SB1 des Kommunikationsendgerätes KEG noch gespeicherten Accounting-Daten D. Es kann allerdings auch als Option vorgesehen sein, dass die Accounting-Daten D in dem Kommunikationsendgerät KEG nicht gelöscht werden, sondern dass diese lediglich markiert werden ("Übertragung erfolgreich") und (beispielsweise zu Beweiszwecken) weiterhin in dem Kommunikationsendgerät KEG gespeichert bleiben.

Im Kommunikationsnetz KN werden die Accounting-Daten D an das Abrechnungssystem AS weitergeleitet. Mittels der in den Tariftabellen TT enthaltenen Informationen berechnet das Abrechnungssystem AS aus den Accounting-Daten D den für die Nutzung des Dienstes "Car-Race V.3.7.5" zu zahlenden Betrag. Im Ausführungsbeispiel ergibt sich dieser Betrag wie folgt: 15,50 Minuten x (0,50 Euro/10 Minuten) = 0,775 Euro. Dieser Betrag in Höhe von gerundet 0,77 Euro wird von dem Guthabenkonto GK des Nutzers des kostenpflichtigen Dienstes "Car-Race" abgebucht. Anhand der mit den Accounting-Daten D mitübertragenen Kennung ("Karl Müller, 01711234567") des Dienstnutzers wird das diesem Nutzer zugeordnete Guthabenkonto GK ermittelt.

Schließlich werden optional Abrechnungsinformationen A von dem Abrechnungssystem AS über das Kommunikationsnetz KN zu dem Kommunikationsendgerät KEG übermittelt. Diese Abrechnungsinformationen A werden beispielsweise auf einer Anzeigeeinheit des Kommunikationsendgerätes KEG ausgegeben, um den Nutzer des Kommunikationsendgerätes KEG über die Abbuchung von seinem Guthabenkonto GK zu informieren.

Alternativ kann der von dem Abrechnungssystem AS errechnete Zahlbetrag auch mittels einer so genannten "Postprocessing-Abrechnung" abgerechnet werden. Ein Beispiel für eine derartige Postprocessing-Abrechnung ist eine Rechnungserstellung über den Zahlbetrag, wobei diese Rechnung später von dem Nutzer des Kommunikationsendgerätes KEG (beispielsweise mittels einer üblichen Banküberweisung) beglichen wird. Auch bei Nutzung eines Postprocessing-Abrechnungssystems bleiben die oben beschriebenen grundsätzlichen Abläufe unverändert.

Bei dem oben erläuterten Verfahren kann alternativ vorgesehen sein, dass die bei dem Kommunikationsendgerät KEG gespeicherten Accounting-Daten D zu vorgewählten Zeitpunkten (beispielsweise zu jeder vollen Stunde oder einmal täglich um 00:30 Uhr) von dem Kommunikationsendgerät über das Mobilkommunikationsnetz zu dem Abrechnungssystem AS übertragen werden.

Alternativ kann das Verfahren auch so ablaufen, dass die abgespeicherten Accounting-Daten D von dem Kommunikationsendgerät zu dem Abrechnungssystem übertragen werden, wenn von dem Abrechnungssystem oder von dem Mobilkommunikationsnetz eine Anforderungsnachricht zu dem Kommunikationsendgerät KEG gesendet wird. Damit kann vorteilhafterweise von Seiten des Mobilkommunikationsnetzes bzw. dessen Netzbetreibers oder von Seiten des Abrechnungssystems AS der Zeitpunkt der Übertragung der Daten festgelegt werden.

Wenn sich über einen längeren Zeitraum keine Kommunikationsverbindung zwischen dem Kommunikationsendgerät KEG und dem Mobilfunknetz KN aufbauen lässt (weil sich im Ausführungsbeispiel beispielsweise der Nutzer des Kommunikationsendgerätes KEG sehr lange in dem elektromagnetische Wellen abschirmenden Gebäude aufhält) und wenn der Nutzer intensiv den kostenpflichtigen Dienst nutzt, dann werden in dem Kommunikationsendgerät KEG Daten zwischengespeichert, welche einen erheblichen Nutzungsumfang des Dienstes betreffen. Wenn aus den bei dem Kommunikationsendgerät KEG gespeicherten (und noch nicht zu dem Kommunikationsnetz KN übertragenen) Accounting-Daten D hervorgeht, dass ein vorgewählter Nutzungsumfang des Dienstes überschritten wurde, dann wird von dem Kommunikationsendgerät KEG eine weitere Nutzung dieses Dienstes eingeschränkt. (Im Ausführungsbeispiel könnte dieser vorgewählte Nutzungsumfang beispielsweise dann überschritten sein, wenn der Nutzer länger als zwei Stunden den Dienst "Car-Race" genutzt hat, das heißt, länger als zwei Stunden dieses Spiel gespielt hat.) Im Ausführungsbeispiel besteht die Einschränkung darin, dass der Nutzer lediglich weitere zehn Minuten das laufende Spiel zu Ende spielen kann und dass nach Ablauf dieser zehn Minuten das Spiel beendet wird. Der Nutzer wird darüber entsprechend informiert. Weiterhin kann der Nutzer optional auch darüber informiert werden, dass er keine weiteren kostenpflichtigen Dienste nutzen kann, bis wieder eine Kommunikationsverbindung zwischen dem mobilen Kommunikationsendgerät und dem Mobilkommunikationsnetz KN aufgebaut werden kann und über diese Kommunikationsverbindung die zwischengespeicherten Accounting-Daten D zu dem Abrechnungssystem AS übertragen werden können.

Diese Einschränkung oder Beschränkung der Nutzung der kostenpflichtigen Dienste kann von einem Überwachungsprogramm realisiert werden, welches Zugriff auf die in dem gesicherten Speicherbereich SB1 abgespeicherten Accounting-Daten D hat und welches ebenfalls von dem vertrauenswürdigen Plattformmodul TPM1 auf Sicherheit und Unverändertheit überprüft wurde. Bei Überschreitung des vorgewählten Nutzungsumfangs des Dienstes sendet dieses Überwachungsprogramm entsprechende Informationsnachrichten an den Dienstnutzer und beendet die Dienstnutzung.

Bei intensiver Nutzung von kostenpflichtigen Diensten wird der Fall auftreten, dass der Nutzer des Kommunikationsendgerätes den Kontostand seines Guthabenkontos GK erhöhen möchte (das Guthabenkonto "aufladen" möchte). Dieser Aufladevorgang kann durch den Einsatz von "trusted computing" (TC) sicher ausgeführt werden. Dazu nimmt das Mobile Kommunikationsendgerät Kontakt mit einer sogenannten Akzeptanzstelle auf. Bei einer derartigen Akzeptanzstelle kann es sich beispielsweise um einen Bankautomaten (automatic teller machine, ATM) handeln, welcher zur Aufladung von Guthabenkonten ausgestaltet ist. Die Kontaktaufnahme zwischen dem Kommunikationsendgerät KEG und der Akzeptanzstelle kann mittels unterschiedlichster Technologien und mittels unterschiedlichster Kommunikationsprotokolle erfolgen. Beispielsweise kann diese Kontaktaufnahme mittels der bekannten BlueTooth-Technologie (Kurzstreckenfunk) erfolgen oder mittels der bekannten Infrarot-Übertragungstechnologie (beispielsweise der IrDA-Technologie, IrDA = Infrared Data Association). Die Kommunikationsverbindung zwischen dem mobilen Kommunikationsendgerät KEG und der Akzeptanzstelle kann mittels der bekannten Mechanismen SSL/TLS (SSL/TLS = secure socket layer/transport layer security) geschützt werden.

Im Ausführungsbeispiel soll angenommen werden, dass der Kunde bei seiner Bank ein Bankkonto unterhält, von dem er einen gewissen Geldbetrag (Erhöhungssumme) abheben und auf sein Guthabenkonto GK transferieren möchte. In dem Bankautomat, der im Ausführungsbeispiel die Akzeptanzstelle bildet, ist ebenfalls ein vertrauenswürdiges Plattformmodul integriert. Mittels dieses vertrauenswürdigen Plattformmoduls wird der Bankautomat analog zu der oben beschriebenen Weise auf Sicherheit und Unverändertheit überprüft. Daher vertraut der Betreiber des Mobilfunknetzes KN der Technik des Bankautomaten und akzeptiert von dem Bankautomat abgesendete Nachrichten.

Nachdem der Nutzer mittels des Bankautomaten eine Transferierung des Geldbetrages von seinem Bankkonto auf sein Guthabenkonto veranlasst hat, sendet der Bankautomat eine entsprechende Kontonachricht (beispielsweise über die BlueTooth-Funkverbindung) an das Kommunikationsendgerät KEG. Das Kommunikationsendgerät KEG sendet diese Kontonachricht unverändert an das Kommunikationsnetz KN weiter; in diesem Zusammenhang dient das Kommunikationsendgerät KEG der Nachrichtenweiterleitung. Dadurch wird vorteilhafterweise erreicht, dass beim Bankautomat kein eigenes Kommunikationsmodul für eine direkte Kommunikation mit dem Kommunikationsnetz KN vorhanden zu sein braucht; vielmehr wird diese Kommunikation über das Kommunikationsendgerät KEG abgewickelt. Dazu kann beispielsweise die bei Kommunikationsendgeräten oftmals sowieso vorhandene Infrarotschnittstelle oder BlueTooth-Schnittstelle verwendet werden. Der Einbau einer Infrarotschnittstelle oder BlueTooth-Schnittstelle in einen Bankautomaten (oder allgemein in eine Akzeptanzstelle) ist dabei wesentlich preiswerter als der Einbau z.B. eines 2G-Funkmoduls oder 3G-Funkmoduls.

Das Kommunikationsnetz KN empfängt die Kontonachricht des Bankautomaten und akzeptiert die in dieser Nachricht enthaltenen Informationen, da seitens des Netzwerkoperators MNO aufgrund des Vorhandenseins des integrierten Plattformmoduls in dem Bankautomaten auf die Sicherheit und Integrität des Bankautomaten vertraut wird. Die Kontonachricht wird von dem Mobilkommunikationsnetz zu dem Abrechnungssystem AS weitergeleitet. Daraufhin erhöht das Abrechnungssystem AS entsprechend der in der empfangenen Kontonachricht enthaltenen Informationen den Kontostand des Guthabenkontos. Der eigentliche Geldausgleich zwischen dem Bankkonto und einem Konto eines Betreibers des Abrechnungssystems AS kann später auf herkömmliche Weise (beispielsweise mittels Banküberweisung oder Bankeinzug) vorgenommen werden. Auf diese Weise wurde für die Erhöhung des Kontostands des Guthabenkontos eine Erhöhungssumme bezahlt.

Weiterhin bestätigt das Kommunikationsnetz KN gegenüber der Akzeptanzstelle den Empfang der Kontonachricht und die Aufladung des Guthabenkontos, woraufhin die Akzeptanzstelle registriert, dass der Aufladevorgang des Guthabenkontos beendet ist. Optional kann von dem Kommunikationsnetz KN zusätzlich eine Informationsnachricht an das Kommunikationsendgerät KEG gesendet werden, mit der der Nutzer des Kommunikationsendgerätes KEG über die erfolgte Aufladung des Guthabenkontos informiert wird.

Bei dem beschriebenen Aufladeverfahren ist insbesondere vorteilhaft, dass lediglich ein Vertrauensverhältnis zwischen dem Netzwerkoperator MNO bzw. dem Abrechungssystem AS und dem Kommunikationsendgerät KEG zu bestehen braucht, was aufgrund des in dem Kommunikationsendgerät KEG eingebauten vertrauenswürdigen Plattformmoduls TPM1 einfach zu realisieren ist. Aufgrund des Vorhandenseins des weiteren vertrauenswürdigen Plattformmoduls (TPM) in dem Bankautomaten vertraut der Netzwerkoperator bzw. der Betreiber des Abrechnungssystems AS darüber hinaus dem Bankautomaten, so dass er dessen Nachrichten (beispielsweise die Kontonachricht) akzeptiert.

Es wurde ein Verfahren und ein Kommunikationsendgerät beschrieben, bei denen durch Anwendung der Prinzipien des "trusted computing" (TC), insbesondere durch Einsatz von vertrauenswürdigen Plattformmodulen, eine nicht autorisierte Veränderung oder Verfälschung sowohl des Datenerfassungsprogramms als auch des sicheren Speicherbereiches und der in diesem Speicherbereich abgespeicherten Daten verhindert wird. Weiterhin kann mittels der in dem Kommunikationsendgerät KEG abgespeicherten öffentlichen und privaten Schlüssel, insbesondere des signierten öffentlichen Schlüssels ÖS1SIG, eindeutig das Kommunikationsendgerät KEG identifiziert werden. Somit können die von diesem Kommunikationsendgerät KEG zu dem Abrechnungssystem übertragenen Accounting-Daten D zuverlässig dem jeweilig zugehörigen Konto (hier dem Guthabenkonto GK) zugeordnet werden. Generell kann das Verfahren vor einer betrügerischen Abspeicherung und späteren Wiederverwendung der übertragenen Nachrichten geschützt werden (d.h. vor einer sogenannten replay attack), indem den Nachrichten eine oder mehrere Zufallszahlen (noncen) zugeordnet werden. Da eine z.B. unberechtigterweise abgefangene und gespeicherte "ältere" Nachricht eine andere ("ältere") Zufallszahl zugeordnet hätte, können solche "ältere" Nachrichten sicher erkannt werden.

Insbesondere ist von Vorteil, dass seitens des mobilen Kommunikationsnetzes KN bzw. seitens des Netzwerkoperators MNO kein aufwendiges Führen von Negativlisten notwendig ist, in denen registriert ist, welche Kommunikationsendgeräte aktuell keine kostenpflichtigen Dienste mehr nutzen dürfen. Dies wird durch die Erfassung und Überwachung der Accounting-Daten im Kommunikationsendgerät KEG unnötig. Dadurch wird die Infrastruktur des mobilen Kommunikationsnetzes KN erheblich entlastet, weil damit vermieden wird, dass bei jedem Einbuchen bzw. Anmelden eines Kommunikationsendgerätes bei dem Mobilfunknetz solche Negativlisten überprüft werden müssen.

Mit dem beschriebenen Verfahren und dem beschriebenen Kommunikationsendgerät kann die Abrechnung der Nutzung von kostenpflichtigen Diensten bedeutend vereinfacht werden, weil ein erheblicher Teil des Verfahrens unter Nutzung der in dem Kommunikationsendgerät vorhandenen Ressourcen abläuft und damit unabhängig vom verwendeten Kommunikationsnetz ist. Das Kommunikationsendgerät (Hardware und Software) wird durch das vertrauenswürdige Plattformmodul vor unzulässigen Veränderungen oder Manipulationen geschützt und ist nur durch den Netzwerkoperator MNO veränderbar, weil nur der Netzwerkoperator als "owner" des Kommunikationsendgerätes KEG zu Veränderungen befugt ist.

Durch den Einsatz von "trusted computing", insbesondere durch den Einsatz von vertrauenswürdigen Plattformmodulen, kann eine sichere und zuverlässige Aussage über die Integrität des Kommunikationsendgerätes KEG und der auf diesem vorhandenen Softwareprogrammen gemacht werden. Dabei kann seitens des Kommunikationsnetzes KN bzw. seitens des Netzwerkoperators MNO dieses Kommunikationsnetzes über die Funkschnittstelle das Kommunikationsendgerät KEG kontrolliert, dessen Status abgefragt und somit sichergestellt werden, dass das Kommunikationsendgerät KEG inklusive der installierten Programme unverändert ist (und deshalb erwartungsgemäß funktioniert). Das vertrauenswürdige Plattformmodul TPM1 stellt Verschlüsselungsroutinen zur Verfügung, ermöglicht das sichere Booten ("secure boot") des Kommunikationsendgerätes sowie die Fernabfrage ("remote attestation"). Damit wird es für das Kommunikationsnetz bzw. für den Netzwerkoperators dieses Kommunikationsnetzes möglich, "aus der Ferne" festzustellen, ob sich das Kommunikationsendgerät in dem erwarteten vertrauenswürdigen Zustand befindet oder ob an dem Kommunikationsendgerät Änderungen vorgenommen wurden. Falls an dem Kommunikationsendgerät Manipulationen aufgetreten sind und sich das Kommunikationsendgerät also nicht in dem vertrauenswürdigen Zustand befindet, dann wird dem Kommunikationsendgerät die Nutzung von kostenpflichtigen Diensten verwehrt.

Auf den während der "Take-Ownership-Phase" übertragenen Schlüsseln und Zertifikaten basiert die spätere Verwendung des Kommunikationsendgerätes KEG. Im Rahmen eines Anmeldungsvorganges überträgt das Kommunikationsendgerät seinen signierten öffentlichen Schlüssel ÖS1SIG an das Kommunikationsnetz KN. Anhand dieses signierten öffentlichen Schlüssels erkennt das Kommunikationsnetz die Identität des Kommunikationsgerätes. Daraufhin wird ein mittels der SSL/TLS-Technik verschlüsselter Kanal zwischen dem Kommunikationsendgerät und dem Kommunikationsnetz aufgebaut und die "online attestation" durchgeführt. Dadurch wird sichergestellt, dass das Mobilgerät sicher gestartet (secure boot) wurde und dass das vertrauenswürdige Plattformmodul aktiv ist. Dies stellt die Basis für eine vertrauenswürdige Abrechnung der Nutzung von kostenpflichtigen Diensten dar. Daraufhin werden die von dem Kommunikationsendgerät KEG an das Kommunikationsnetz KN abgesendeten Nachrichten akzeptiert.

Weitere Beispiele für kostenpflichtige Dienste, deren Nutzung abgerechnet werden kann, sind z.B. auch das Durchführen von WLAN-, WIMAX- oder BlueTooth-Kommunikationsverbindungen (WLAN = wireless local area network, WiMAX = Worldwide Interoperability for Microwave Access).

Es wurde ein Verfahren und ein mobiles Kommunikationsendgerät beschrieben, mit denen kostenpflichtige Dienste selbst dann genutzt werden können, wenn das Kommunikationsendgerät temporär keine Verbindung zu einem Mobilkommunikationsnetz hat. Daten, welche die Nutzung der kostenpflichtigen Dienste betreffen, werden in dem Kommunikationsendgerät erfasst und gespeichert. Diese Daten werden zu einem Abrechnungssystem übertragen, wenn die Kommunikationsverbindung zwischen dem Kommunikationsendgerät und dem Mobilkommunikationsnetz wieder herstellbar ist. Ein Schutz der Datenerfassung, der Speicherung und der Übertragung der Daten vor Manipulationen wird durch ein in das Kommunikationsendgerät KEG integriertes vertrauenswürdiges Plattformmodul sichergestellt.

## Patentansprüche

1. Verfahren zum Ermöglichen einer Abrechnung einer Nutzung von kostenpflichtigen Diensten, wobei bei dem Verfahren
- von einem mobilen Kommunikationsendgerät (KEG) Daten (D) erfasst werden, welche die Nutzung kostenpflichtiger Dienste mittels des Kommunikationsendgeräts (KEG) betreffen,
- die erfassten Daten (D) in einem Speicher (SB1) des Kommunikationsendgeräts (KEG) gespeichert werden, und
- zeitversetzt die Daten (D) von dem Kommunikationsendgerät (KEG) über ein Mobilkommunikationsnetz (KN) zu einem Abrechnungssystem (AS) übertragen werden, von welchem die Abrechnung der Nutzung der kostenpflichtigen Dienste ausführbar ist.

2. Verfahren nach Anspruch 1,
**dadurch gekennzeichnet, dass**
- ein Datenerfassungsprogramm (DP) des mobilen Kommunikationsendgeräts (KEG) auf Unverändertheit überprüft wird,
- das Datenerfassungsprogramm (DP) gestartet wird, wenn es unverändert ist, und
- von dem Datenerfassungsprogramm (DP) die Daten (D) erfasst werden, welche die Nutzung kostenpflichtiger Dienste mittels des Kommunikationsendgeräts (KEG) betreffen.

3. Verfahren nach Anspruch 1 oder 2,
**dadurch gekennzeichnet, dass**
- das Datenerfassungsprogramm (DP) auf Unverändertheit überprüft wird mittels eines in das Kommunikationsendgerät (KEG) integrierten vertrauenswürdigen Plattformmoduls (TPM1).

4. Verfahren nach einem der vorhergehenden Ansprüche,
**dadurch gekennzeichnet, dass**
- das Datenerfassungsprogramm (DP) auf Unverändertheit überprüft wird mittels einer Prüfsumme.

5. Verfahren nach einem der vorhergehenden Ansprüche,
**dadurch gekennzeichnet, dass**
- die erfassten Daten (D) in dem Kommunikationsendgerät (KEG) gespeichert werden, bis eine Kommunikationsverbindung zwischen dem mobilen Kommunikationsendgerät (KEG) und dem Mobilkommunikationsnetz (KN) aufbaubar ist.

6. Verfahren nach einem der vorhergehenden Ansprüche,
**dadurch gekennzeichnet, dass**
- die erfassten Daten (D) in einem gesicherten Speicherbereich (SB1) des Kommunikationsendgeräts (KEG) gespeichert werden.

7. Verfahren nach einem der vorhergehenden Ansprüche,
**dadurch gekennzeichnet, dass**
- die Daten (D) zu vorgewählten Zeitpunkten von dem Kommunikationsendgerät (KEG) über das Mobilkommunikationsnetz (KN) zu dem Abrechnungssystem (AS) übertragen werden.

8. Verfahren nach einem der vorhergehenden Ansprüche,
**dadurch gekennzeichnet, dass**
- auf eine Anforderung des Mobilkommunikationsnetzes (KN) hin die Daten (D) von dem Kommunikationsendgerät (KEG) über das Mobilkommunikationsnetz (KN) zu dem Abrechnungssystem (AS) übertragen werden.

9. Verfahren nach einem der vorhergehenden Ansprüche,
**dadurch gekennzeichnet, dass**
- von dem Kommunikationsendgerät (KEG) nach einer erfolgreichen Übertragung der Daten (D) eine die übertragenen Daten (D) betreffende Bestätigungsnachricht (B) empfangen wird, und
- daraufhin von dem Kommunikationsendgerät (KEG) die Speicherung der erfolgreich übertragenen Daten beendet wird.

10. Verfahren nach einem der vorhergehenden Ansprüche,
**dadurch gekennzeichnet, dass**
- eine weitere Nutzung von kostenpflichtigen Diensten kommunikationsendgeräteseitig eingeschränkt wird, wenn die Nutzung der Dienste, welche zu den erfassten, gespeicherten und noch nicht zu dem Abrechnungssystem (AS) übertragenen Daten (D) geführt hat, einen vorgewählten Nutzungsumfang überschreitet.

11. Verfahren nach einem der vorhergehenden Ansprüche,
**dadurch gekennzeichnet, dass**
- dem Kommunikationsendgerät (KEG) oder dessen Nutzer ein Guthabenkonto (GK) zugeordnet ist, über das die Abrechnung der Nutzung der kostenpflichtigen Dienste ausführbar ist.

12. Verfahren nach Anspruch 11,
**dadurch gekennzeichnet, dass**
mittels des Kommunikationsendgeräts (KEG) der Kontostand des Guthabenkontos (GK) erhöht wird, indem
- von dem Kommunikationsendgerät (KEG) eine das Guthabenkonto (GK) betreffende Kontonachricht empfangen wird, welche die Information enthält, dass für die Erhöhung des Kontostands eine Erhöhungssumme bezahlt wurde, und
- diese Kontonachricht von dem Kommunikationsendgerät (KEG) über das Mobilkommunikationsnetz (KN) zu dem Abrechnungssystem (AS) übertragen wird, wodurch das Abrechnungssystem (AS) angeregt wird, den Kontostand des Guthabenkontos (GK) zu erhöhen.

13. Kommunikationsendgerät,
- das ausgestaltet ist zum Erfassen von Daten (D), welche die Nutzung kostenpflichtiger Dienste mittels des Kommunikationsendgeräts (KEG) betreffen,
- mit einer Speichereinheit (SB1) zum Speichern der erfassten Daten (D), und
- mit einer Übertragungseinheit (Ü) zum Übertragen der Daten (D) über ein Mobilkommunikationsnetz (KN) zu einem Abrechnungssystem (AS).

14. Kommunikationsendgerät nach Anspruch 13,
**gekennzeichnet durch**
- ein Datenerfassungsprogramm (DP) zum Erfassen der Daten (D), welche die Nutzung kostenpflichtiger Dienste mittels des Kommunikationsendgeräts (KEG) betreffen.

15. Kommunikationsendgerät nach Anspruch 14,
**gekennzeichnet durch**
- einer Einrichtung (TPM1), die das Datenerfassungsprogramm (DP) auf Unverändertheit überprüft und ein Starten des Datenerfassungsprogramm (DP) ermöglicht, wenn es unverändert ist.

16. Kommunikationsendgerät nach Anspruch 15,
**dadurch gekennzeichnet, dass**
- die Einrichtung als ein vertrauenswürdiges Plattformmodul (TPM1) ausgestaltet ist, das in das Kommunikationsendgerät (KEG) integriert ist.

17. Kommunikationsendgerät nach Anspruch 15 oder 16,
**dadurch gekennzeichnet, dass**
- die Einrichtung (TPM1) so ausgestaltet ist, dass sie das Datenerfassungsprogramm (DP) auf Unverändertheit überprüft mittels einer Prüfsumme.

18. Kommunikationsendgerät nach einem der Ansprüche 13 bis 17,
**dadurch gekennzeichnet dass**
- die Speichereinheit einen gesicherten Speicherbereich (SB1) zum Speichern der erfassten Daten (D) aufweist.
